# EUROPÄISCHE PATENTSCHRIFT

(11) **EP 0 872 334 B1**
(45) Veröffentlichungstag und Bekanntmachung des Hinweises auf die Patenterteilung: **09.10.2002**
(21) Anmeldenummer: 98106863.8
(22) Anmeldetag: 16.04.1998
(51) Int. Cl.: B32B 11/02, B32B 25/14, E04D 5/10, D06N 5/00, C08L 95/00, E04D 5/06, B32B 11/10

(54) **Bitumenschweissbahn zur Abdichtung von Brückenbauwerken, Parkdecks od.dgl.**
Bitumen sealing sheet for use in bridge construction, car parks or the like
Bande bitumineuse scellable utilisable pour la construction de ponts, de parcs stationnement ou analogues

(30) Priorität: 16.04.1997 DE 29706868 U
(43) Veröffentlichungstag der Anmeldung: 21.10.1998
(73) Patentinhaber: Dr. Kohl GmbH & Cie Dachbelag- und Bautenschutzmittel-Fabrik, D-46282 Dorsten (DE); ATOFINA Research, 7181 Seneffe (Feluy) (BE)
(72) Erfinder: Hörnig, Andreas Dr., 46284 Dorsten (DE); Radermacher, Fabienne, 6230 Buzet (BE); Drieskens, Bruno Maria Guido, 1060 Sint-Gillis (BE)
(74) Vertreter: Spalthoff, Adolf

(56) Entgegenhaltungen:
- EP-A- 0 116 301
- EP-A- 0 338 336
- EP-A- 0 447 876
- DE-A- 3 405 109
- US-A- 4 091 135
- FRANCK A.; BIEDERBICK K. : "KUNSTSSTOFF - KOMPENDIUM: AUFBAU, POLYMERISATION, VERARBEITUNG, EIGENSCHAFTEN, ANWENDUNG DER THERMOPLASTE, ELASTOMERE, DUROPLASTE, POLYMERLEGIERUNGEN." 1990 , VOGEL VERLAG , WÜRZBURG, DE XP002090384 * Seite 139 *

## Beschreibung

Die Erfindung betrifft eine Bitumenschweißbahn zur Abdichtung von Brückenbauwerken, Parkdecks od.dgl. nach dem Oberbegriff des Patentanspruchs 1.

Es ist bekannt, zur Herstellung von Dachbahnen Elastomerbitumen zu verwenden und dieses insbesondere auch bei der Herstellung von Spezialbitumenschweißbahnen zur Abdichtung von Brückenbauwerken und Parkdecks mit ein- oder zweilagigen Systemen unter Guß- bzw. Walzasphalt einzusetzen. Es hat sich gezeigt, daß die bekannten Elastomerbitumenschweißbahnen zur Abdichtung von Brückenbauwerken, Parkdecks od.dgl. den speziellen Belastungen der Bauwerke nur teilweise gewachsen sind, bzw. den technischen Anforderungen laut den geltenden Richtlinien nicht entsprechen.

Die EP-A-0 338 336 beschreibt wasserdichte Folien oder Bahnen, die aus drei Schichten bestehen, wobei die äußere eine bituminöse Zusammensetzung aufweist, die im wesentlichen zu 60 bis 90 Gew. % aus Bitumen besteht, zu 10 bis 40 Gew. % aus einem Styrol-Butadien-Blockcopolymer und die evtl. amorphes Polypropylen und anorganische Füllstoffe enthält. Eine vulkanisierte Polyolefinschicht ist in einem sandwichartigen Aufbau zwischen den beiden äußeren bituminösen Schichten eingeschlossen.

Die EP-A-0 447 876 zeigt Bitumenschweißbahnen, die eine Trägerschicht und eine Elastomerbitumendeckschicht aufweisen, die hinsichtlich ihres Bitumen- und hinsichtlich ihres Elastomerbitumenanteils nicht näher definiert ist.

Aus der DE 34 05 109 A ist es bereits bekannt, hochelastische bituminöse Bahnen in Verbindung mit Polyester-Spinnvliesstoffen einzusetzen.

Von diesem Stand der Technik ausgehend liegt der Erfindung die Aufgabe zugrunde, eine Bitumenschweißbahn zu schaffen, welche nicht nur den speziellen Belastungen bei der Fertigstellung der Bauwerke vollständig gewachsen ist, sondern auch in der Lage ist, den mechanischen Belastungen bei der Benutzung der Bauwerke, z.B. Verkehrsbelastung auf Autobahnbrücken, Belastung durch Schwerverkehr, Bremsvorgänge usw., standzuhalten. Zielrichtung ist insbesondere die geltende Richtlinie für derartige Bauwerke (ZTV-Bel-B1/87) zu erfüllen.

Diese Aufgabe wird erfindungsgemäß durch die Merkmale des kennzeichnenden Teils des Patentanspruchs 1 gelöst.

Durch die vorteilhafte Ausgestaltung der erfindungsgemäßen Bitumenschweißbahn nach den Patentansprüchen 2 bis 5 hat sich überraschenderweise ergeben, daß diese gegenüber den Bitumenschweißbahnen nach dem Stande der Technik folgende Vorteile aufweist:
1. Eine beschleunigte Verarbeitbarkeit gegenüber bisherigen Brückenbahnen;
2. eine deutlich verbesserte dynamische Rißüberbrückung im Vergleich zu bislang verwendeten Dichtungsbahnen;
3. eine ganz erheblich verbesserte Schubfestigkeit gegenüber den bisher verwendeten Bahnen und
4. eine verbesserte Haftung am Untergrund.

Obwohl in Bitumen vorliegende Mischungen von radialen oder linearen Monovinyl-Aromaten/Dien-Blockcopolymeren oder von anderen Polymeren im Stand der Technik bekannt sind, wurde überraschend herausgefunden, daß es möglich war, bestimmte physikalische Eigenschaften wasserdichter Bahnen zu verbessern, wenn der Polystyrol-Gehalt im Copolymer über 30 Gew. % erhöht wurde, während spezifische Bereiche des Spitzemolekulargewichts für das elastomere Segment und die Polyvinyl-Aromaten-Endblöcke beachtet wurden, die ein Monovinyl-Aromaten/Dien-Blockcopolymer-Molekül bilden. Diese Vorteile ergaben sich für die speziellen erfindungsgemäßen Schweißbahnen.

Im folgenden wird die spezielle Zusammensetzung elastomerer Blockcopolymere angegeben, die, wenn dieses Polymer in der bituminösen Zusammensetzung eingesetzt wird, dazu beiträgt, die verbesserten Eigenschaften zu schaffen, welche unter den Punkten 1, 2 und 3 den letztendlichen erfindungsgemäßen Schweißbahnen zugeschrieben werden. Diese Eigenschaften werden im Zusammenhang mit den die Schweißbahn-Komponenten kennzeichnenden Parametern erzielt, z.B. der Art und der Menge der mineralischen Füllstoffe, der Schichtdicke und der Art des Polyesterträgers.

### Beschreibung des Blockcopolymers:

In der folgenden Beschreibung sind die Spitzemolekulargewichte Mp der Copolymere oder der polymeren Segmente Spitzemolekulargewichte, wie sie bei der Molekulargewichtsverteilungskurve erscheinen, die durch die "Gel Permeation Chromatography" Analysen erhalten wird, die für diese Copolymere oder Segmente durchgeführt werden.

Die bituminöse Zusammensetzung besteht im wesentlichen aus einer bituminösen Komponente mit einer Penetration gemäß ASTM D5-75 zwischen 3 bis 30 mm bei 25 Grad C und zumindest einem gekoppelt radialförmigen elastomeren Blockcopolymer, dessen Struktur durch die allgemeine Formel (A-X)nY beschrieben ist, wobei Y den Rückstand eines Kopplungsmittels darstellt, "n" die Funktionalitätsnummer dieses Kopplungsmittels darstellt und die Anzahl Arme (A-X) angibt, wobei A einen Polymerblock von Styrolmonomeren darstellt, und X elastomere Segmente darstellt, die im wesentlichen aus polymerisierten 1,3-Butadien-Monomeren bestehen.

Die Anzahl der Arme ist abhängig von der Funktionalität des Kopplungsmittels und ist im vorliegenden Fall gleich 4.

Die Molekulargewichtsverteilung solcher Copolymere ist durch ein Spitzenmolekulargewicht nach der Kopplung gekennzeichnet, das zwischen 160.000 und 320.000 liegt.

Solche Copolymere enthalten zwischen 35 und 55 Gew. % polymerisierte Styrol-Monomere, vorzugsweise 45 Gew. %.

Die elastomeren Segmente X jedes Arms enthalten im wesentlichen polymerisierte 1,3-Butadien-Monomere und haben vorzugsweise ein Spitzenmolekulargewicht zwischen 17.000 und 60.000. Die polymeren Endblöcke A, die aus Styrol-Monomeren bestehen, haben Spitzenmolekulargewichte zwischen 13.000 und 30.000.

### Komponenten in der bituminösen Zusammensetzung:

Die Copolymer-Gewichtskonzentration in der bituminösen Zusammensetzung gemäß der Erfindung beträgt zwischen 10 und 15 %.

Die Bitumina, die verwendet werden, um die bituminösen Zusammensetzungen der wasserdichten Schweißbahnen herzustellen, sind dadurch gekennzeichnet, daß sie Penetrationen zwischen 5 und 200 zehntel Millimeter bei 25 Grad C haben, wie durch das Standardverfahren DIN 52010 gemessen wurde. Die Penetrationen liegen vorzugsweise bei 80 zehntel Millimetern. Diese Komponenten sind nicht oxidierte Destillations-Bitumen.

### Verbesserte physikalische Eigenschaften der Schweißbahnen:

Solche bituminösen Zusammensetzungen, wie sie durch die vorliegende Erfindung angegeben sind, und die spezifischen Parameter, die die erfindungsgemäßen Schweißbahnen beschreiben, ermöglichen eine einfache Handhabung und eine gute Betriebsfähigkeit dieser Schweißbahnen, wodurch geeignete dynamische Viskositätswerte zwischen 2 und 8 Pa.s bei 180 Grad C und 1 und 5 Pa.s bei 200 Grad C gesichert sind.

Die ausgewählten Bereiche des Spitzenmolekulargewichts für elastomere Segmente X, Polystyrol-Endblöcke A und Copolymer-Moleküle der Formel (A-X)nY tragen dazu bei, derartigen letztendlich wasserdichten Schweißbahnen, durch das Herstellen der bituminösen Zusammensetzung, eine hohe dynamische Rißüberbrückung und eine verbesserte Schubfestigkeit zu geben, wie sie durch die einschlägigen Prüfvorschriften nach der TP-Bel-B definiert sind.

Die erfindungsgemäßen wasserdichten Schweißbahnen haben einen deutlich höheren Erweichungspunkt, gemessen durch das Standardverfahren DIN 52011 und eine geringere Penetration als diejenigen Schweißbahnen, die bituminöse Zusammensetzungen, mineralische Füllstoffe, Schichtdicken oder Polyester-Träger aufweisen, die außerhalb der erfindungsgemäßen Spezifizierung liegen.

Genauer gesagt sind bei geeigneter Konzentration der Blockcopolymeren in der bituminösen Zusammensetzung und einer geeigneten Einstellung der anderen Parameter, welche die erfindungsgemäßen Schweißbahnen kennzeichnen, solche Schweißbahnen in der Lage, einen Erweichungspunkt von zumindest 140 Grad C, eine Penetration gleich oder unter 30 zehntel Millimetern bei 25 Grad C zu haben, wobei sie darüber hinaus das dynamische Rißüberbrückungs-Prüfverfahren und das Schubfestigkeit-Prüfverfahren entsprechend der TP-Bel-B überstehen.

Vorteilhaft beträgt das Styrol/Butadien-Verhältnis des Polymers größer 30 : 70, vorzugsweise 45 : 55. Der Styrolgehalt des Polymers ist derart bemessen, daß die verlegten Bahnen mindestens die Anforderungen der einschlägigen Zulassungsrichtlinien erfüllen. Der höhere Styrolgehalt bewirkt bei gleichem Gesamt-Elastomerbitumen-Gehalt zum einen deutlich erhöhte Erweichungspunkte im Vergleich zu normalen Elastomerbitumen, z.B. ca. 145 Grad C gegenüber ca. 125 Grad C, und andererseits eine deutlich erniedrigte Penetration, z.B. ca. 30/10 mm gegenüber ca. 45/10 mm. Diese beiden Effekte verursachen im Zusammenwirken bei der Schubfestigkeitsprüfung technische Werte, die die der einschlägigen Vorschriften nicht nur erfüllen, sondern diese sogar noch übertreffen.

### Beispiel:

Dieses Ausführungsbeispiel beschreibt wasserdichte erfindungsgemäße Schweißbahnen. Sie sind gebildet durch eine oder zwei äußere Deckschichten, die im wesentlichen aus einer bituminösen Zusammensetzung und zu 25 Gew. % aus mineralischen Füllstoffen bestehen; ein Polyesterträger bildet die dritte Schicht, die in einem halbsandwich- oder sandwichförmigen Aufbau eingeschlossen ist. Die bituminöse Zusammensetzung wird gebildet durch ein radialförmiges SBS-Blockcopolymer mit 45 Gew. % polymerisierten Styrol-Monomeren, vier Armen, und einem Spitzenmolekulargewicht Mp von 190.000 und durch ein B80 Destillations-Bitumen.

Gemäß einem weiteren Merkmal der Erfindung beläuft sich der Anteil des Polymers im löslichen Anteil der Deckschicht auf 14,5 Gew. %. Als Bitumen findet ein Destillationsbitumen, vorzugsweise ein B80 (Penetration von 80/10 mm und Erweichungspunkt ca. 46 - 49 Grad C) Verwendung. Die chemische Zusammensetzung des verwendeten Bitumens ist derart beschaffen, daß die verlegten Bahnen mindestens den Anforderungen der einschlägigen Zulassungsrichtlinien entsprechen. Der Erweichungspunkt der verwendeten Polymerbitumenmassen ist größer als 140 Grad C.

Die erreichten Werte bei der Schubfestigkeit betragen bei 25 Grad C über die in der ZTV-Bel-1/87 geforderten 0,15 N/mm2 hinaus ca. 0,3 N/mm2.

Die erfindungsgemäße Bitumenschweißbahn erfüllt in vollem Umfange auch die sonstigen an eine derartige Bahn zu stellenden Anforderungen, insbesondere auch im Hinblick auf das geforderte Kaltbiegeverhalten.

### Vergleichsbeispiel:

Das Vergleichsbeispiel wurde durchgeführt mit einer handelsüblichen Rezeptur aus dem Dachbahnbereich Bitumensorte: B200 (ca. 175/10 mm und Erweichungspunkt ca. 38 Grad C), Polymersorte: Finaprene 411 und Polymermenge: 13,5 Gew. %.

Bei der Prüfung wurde festgestellt, daß die geforderten Werte für die Schubfestigkeit von 0,15 N/mm2 nicht erreicht wurden, sondern lediglich erheblich kleinere Werte. Weitere Messungen wurden an dieser Stelle nicht durchgeführt.

## Patentansprüche

1. Bitumenschweißbahn zur Abdichtung von Brückenbauwerken, Parkdecks od.dgl., mit einem oben liegenden oder nach oben versetzten Träger, der mit Polymerbitumen getränkt ist und eine untere Deckschicht aus Polymerbitumen aufweist, **dadurch gekennzeichnet, daß** die untere Deckschicht aus Elastomerbitumen ausgebildet ist, **daß** der Bitumengehalt der unteren Deckschicht mindestens 80 Gew. °s, vorzugsweise 85,5 Gew. %, bezogen auf den Gehalt der löslichen Anteile der Deckschicht, beträgt, **daß** der Elastomerbitumenanteil der Deckschicht mindestens 60 Gew. %, vorzugsweise 75 Gew. %, beträgt, **daß** der Elastomerbitumenanteil ein elastomeres Blockcopolymer mit einem Polystyrolgehalt über 35 Gew.-% enthält, **daß** daselastomere Blockcopolymer eine Molekulargewichtsverteilung mit einem Spitzenmolekulargewicht zwischen 160 000 und 320 000 nach der Kopplung aufweist und aus elastomeren Polybutadiensegmenten mit einem Spitzenmolekulargewicht zwischen 17 000 und 60 000 und Polystyrol-Endblöcken mit einem Spitzenmolekulargewicht zwischen 13 000 und 30 000 gebildet ist, **daß** der Anteil mineralischer Füllstoffe vorzugsweise 25 Gew.-% der kompletten Deckmasse beträgt, und **daß** die Dicke der Bitumenschweißbahn bei ihrer Ausbildung als Brückenbahn mindestens 4,5 mm und bei ihrer Ausbildung als Bahn für Parkdecks od.dgl. mindestens 3,8 mm beträgt.

2. Bitumenschweißbahn nach Anspruch 1, bei der das elastomere Blockcopolymer des Elastomerbitumenanteils ein radialförmiges elastomeres Blockcopolymer ist.

3. Bitumenschweißbahn nach Anspruch 1 oder 2, mit einer oberen Deckschicht, die dünn im Vergleich zur unteren Deckschicht und werkstoffmäßig wie die untere Deckschicht zusammengesetzt ist.

4. Bitumenschweißbahn nach einem der Ansprüche 1 bis 3, deren Träger aus Polyesterspinnvlies von mindestens 175 g/m2 besteht.

5. Bitumenschweißbahn nach einem der Ansprüche 1 bis 4, bei der als mineralische Füllstoffe Kalksteinmehl oder Schiefermehl vorgesehen sind.

6. Bitumenschweißbahn nach einem der Ansprüche 1 bis 5, bei der das Styrol/Butadien-Verhältnis des Blockcopolymers zwischen 35 : 65 und 55 : 45, vorzugsweise 45 : 55, beträgt.

7. Bitumenschweißbahn nach einem der Ansprüche 1 bis 6, bei der sich der Anteil des Blockcopolymers im löslichen Anteil der Deckschicht auf größer 10 Gew. %, vorzugsweise auf 14,5 Gew. %, beläuft.

8. Bitumenschweißbahn nach einem der Ansprüche 1 bis 7, bei der als Elastomerbitumen ein Destillationsbitumen, vorzugsweise ein B80, vorgesehen ist.

9. Bitumenschweißbahn nach einem der Ansprüche 1 bis 8, bei der der Erweichungspunkt der verwendeten Polymerbitumenmasse größer als 140 Grad C ist.

10. Bitumenschweißbahn nach einem der Ansprüche 2 bis 9, bei der das radialförmige elastomere Blockcopolymer eine Struktur gemäß der allgemeinen Formel (A-X)nY aufweist, mit
Y : Rückstand eines Kopplungsmittels
n : Funktionalitätsnummer des Kopplungsmittels
A : Polystyrol-Endblock
X : Polybutadiensegment.

11. Bitumenschweißbahn nach Anspruch 10, bei der die Funktionalitätsnummer des Kopplungsmittels und damit die Anzahl der Arme (A-X) vier ist.

## Claims

1. Bituminous sealing sheeting for sealing bridge structures, parking decks or similar, with an upper or high-level supporting base, which is impregnated with polymer bitumen and comprises a lower covering layer of polymer bitumen,
**characterised in that** the lower covering layer is formed from elastomer bitumen, **that** the bitumen content of the lower covering layer is at least 80 wt.%, preferably 85.5 wt.%, related to the content of the soluble components of the covering layer, **that** the elastomer bitumen component of the covering layer is at least 60 wt.%, preferably 75 wt.%, **that** the elastomer bitumen component comprises an elastomer block copolymer with a polystyrene content above 35 wt.%, **that** the elastomer block copolymer has a molecular weight distribution with a peak molecular weight between 160 000 and 320 000 following coupling and is formed from elastomer polybutadiene segments with a peak molecular weight between 17 000 and 60 000 and polystyrene end blocks with a peak molecular weight between 13 000 and 30 000, **that** the mineral filler component preferably constitutes 25 wt.% of the complete covering material, and **that** the bituminous sealing sheeting is at least 4.5 mm thick when formed as a bridge floor and at least 3.8 mm thick when formed as sheeting for parking decks.

2. Bituminous sealing sheeting according to Claim 1, in which the elastomer block copolymer of the elastomer bitumen component is a radial elastomer block copolymer.

3. Bituminous sealing sheeting according to Claim 1 or 2, with an upper covering layer which is thin in comparison with the lower covering layer and is of the same composition as the lower covering layer in material terms.

4. Bituminous sealing sheeting according to any one of Claims 1 to 3, the supporting base of which consists of polyester spunbonded fabric of at least 175 g/m².

5. Bituminous sealing sheeting according to any one of Claims 1 to 4, in which limestone powder or powdered slate is provided as the mineral filler.

6. Bituminous sealing sheeting according to any one of Claims 1 to 5, in which the styrene/butadiene ratio of the block copolymer is between 35 : 65 and 55 : 45, preferably 45 : 55.

7. Bituminous sealing sheeting according to any one of Claims 1 to 6, in which the block copolymer component in the soluble component of the covering layer amounts to more than 10 wt.%, preferably 14.5 wt.%.

8. Bituminous sealing sheeting according to any one of Claims 1 to 7, in which a straight-run bitumen, preferably a B80, is provided as elastomer bitumen.

9. Bituminous sealing sheeting according to any one of Claims 1 to 8,
in which the softening point of the polymer bitumen material which is used is higher than 140 degrees C.

10. Bituminous sealing sheeting according to any one of Claims 1 to 9,
in which the radial elastomer block copolymer has a structure according to the general formula (A-X)nY, where
Y : residue of a coupling agent
n : functionality number of the coupling agent
A : polystyrene end block
X : polybutadiene segment

11. Bituminous sealing sheeting according to Claim 10, in which the functionality number of the coupling agent and thus the number of arms (A-X) is four.

## Revendications

1. Bande de bitume soudable pour l'étanchéification de ponts, de parcs de stationnement à plusieurs niveaux ou d'édifices similaires, avec un support, disposé sur le dessus ou ramené vers le dessus, imbibé de bitume polymère, et une couche de couverture inférieure en bitume polymère, **caractérisée par le fait que** la couche de couverture inférieure est formée de bitume élastomère, que la teneur en bitume élastomère de la couche de couverture inférieure est au moins égale à 80 % en poids, de préférence de 85,5 % en poids, rapportée à la teneur en composants solubles de la couche de couverture, **que** la teneur en bitume élastomère de la couche de couverture est au moins égale à 60 % en poids, de préférence de 75 % en poids, **que** la fraction de bitume élastomère contient un copolymère séquencé élastomère ayant une teneur en polystyrène supérieure à 35 % en poids, **que** le copolymère séquencé élastomère a une distribution de masse moléculaire avec une masse moléculaire au sommet du pic comprise entre 160 000 et 320 000 après couplage et est constitué de segments de polybutadiène élastomère ayant une masse moléculaire au sommet du pic comprise entre 17 000 et 60 000, et de séquences terminales en polystyrène ayant une masse moléculaire au sommet du pic comprise entre 13 000 et 30 000, **que** la teneur en charges minérales est de préférence égale à 25 % en poids rapportée à la masse totale de la couche de couverture, et **que** l'épaisseur de la bande de bitume soudable est au moins égale à 4,5 mm, lorsqu'elle est destinée à des ponts, et est au moins égale à 3,8 mm lorsqu'elle est destinée à des parcs de stationnement ou des édifices similaires.

2. Bande de bitume soudable selon la revendication 1, dans laquelle le copolymère séquencé élastomère de la fraction de bitume élastomère est un copolymère séquencé élastomère à structure radiale.

3. Bande de bitume soudable selon la revendication 1 ou 2, comportant une couche de couverture supérieure qui est plus mince que la couche de couverture inférieure et qui est constituée du même matériau que la couche de couverture inférieure.

4. Bande de bitume soudable selon l'une des revendications 1 à 3, dans laquelle le support est un non-tissé en polyester ayant un poids surfacique au moins égal à 175 g/m².

5. Bande de bitume soudable selon l'une des revendications 1 à 4, dans laquelle les charges minérales sont choisies parmi de la poudre de calcaire ou de la poudre de schiste.

6. Bande de bitume soudable selon l'une des revendications 1 à 5, dans laquelle le rapport styrène/butadiène du copolymère séquencé est compris entre 35/65 et 55/45, et est de préférence égal à 45/55.

7. Bande de bitume soudable selon l'une des revendications 1 à 6, dans laquelle la teneur en copolymère séquencé de la fraction soluble de la couche de couverture est supérieure à 10 % en poids, de préférence égale à 14,5 % en poids.

8. Bande de bitume soudable selon l'une des revendications 1 à 7, dans laquelle le bitume élastomère est un bitume de distillation, de préférence du bitume B80.

9. Bande de bitume soudable selon l'une des revendications 1 à 8, dans laquelle le point de ramollissement de la masse bitumineuse polymère est supérieur à 140 °C.

10. Bande de bitume soudable selon l'une des revendications 2 à 9, dans laquelle le copolymère séquencé élastomère radial a une structure correspondant à la formule générale (A-X)ₙY où Y représente le résidu d'un agent de couplage, n est la valence de l'agent de couplage, A représente une séquence terminale en polystyrène et X représente un segment de polybutadiène.

11. Bande de bitume soudable selon la revendication 10, dans laquelle l'indice de fonctionnalité de l'agent de couplage et, par conséquent, le nombre de bras (A-X) est égal à 4.
